# EUROPEAN PATENT APPLICATION

(11) **EP 1 482 706 A2**
(43) Date of publication of application: **01.12.2004**
(21) Application number: 04011869.7
(22) Date of filing: 19.05.2004
(51) Int. Cl.: H04L 29/06, H04L 12/56

(54) **Method and system for controlling packet transmission using bind update message upon handoff of mobile node in IPv6 based wireless network**

(30) Priority: 29.05.2003 KR 2003034537
(71) Applicant: Samsung Electronics Co., Ltd., Suwon-si, Gyeonggi-do 442-742 (KR)
(72) Inventor: Kim, Kil-Lyeon, Suwon-si, Gyeonggi-do (KR); Choe, Byung-Gu, Youngdeungpo-gu, Seoul (KR)
(74) Representative: Lang, Johannes, Dipl.-Ing.

(57) **Abstract**

A method for controlling packet transmission using a bind update message upon handoff of a mobile node in an IPv6 based wireless network comprise the steps of: when a retransmission timeout occurs after transmitting a pak-ket via a transmission control protocol (TCP) connection established with an arbitrary mobile node, storing a currently set congestion control parameter; retrieving each TCP connection established with a relevant mobile node so as to modify the currently set congestion control parameter to form a congestion control value, and performing congestion control; and, when the bind update message from the mobile node is received, retrieving each TCP connection established with the relevant mobile node, and restoring the congestion control parameter to a value stored before performing the congestion control. Thus, after congestion control is performed due to the occurrence of packet loss upon handoff of the mobile node, a state existing before performance of congestion control can be rapidly recovered, thereby reducing degradation in transfer quality due to the handoff of the mobile node.

## Description

### BACKGROUND OF THE INVENTION

### Technical Field

The present invention relates to a method and system for controlling packet transmission using a bind update message upon handoff of a mobile node in an IPv6 based wireless network and, more particularly, to a method and system for controlling packet transmission that is performed by both a corresponding node and a mobile node when the mobile node performs handoffs in an IPv6 based wireless network.

### Related Art

In a wired and wireless integration environment, a mobile node (MN), which is a wireless terminal, performs a transmission control protocol (TCP) connection to a corresponding node (CN) in a wired network in order to use Internet services, such as Web and E-mail.

At this time, Mobile IP or Mobile IPv6 is utilized such that flow of the TCP connection is prone to failure due to mobility of the mobile node.

A mobile node hands off from an area A to an area B. The mobile node is connected to an Internet via base stations (BSs) located in the area A and the area B, respectively, in order to perform TCP communication with a corresponding node, which provides Internet services.

Recently, as the distribution of mobile terminals has increased, the demand of users for the use of Internet services with wireless terminals any time and anywhere has also increased.

However, TCP, which is conventionally used for data transmission between a mobile node and a corresponding node, is designed only for a wired network and a fixed terminal, each having a relatively low packet loss rate.

The wired network has a low packet loss rate and less occurrence of disconnection compared to the wireless network. Thus, packet loss in the wired network is largely caused by congestion due to buffer overflow and the like in intermediate nodes of the network.

Accordingly, in a TCP protocol, the amount of data introduced into the network is decreased by execution of a congestion control algorithm, such as slow start and congestion avoidance, in order to provide reliable services, such that congestion does not occur.

Meanwhile, the wireless network or the wired and wireless complex network has a low performance, a long end-to-end latency, and a high packet loss rate, and frequent generation of packet loss due to handoff, compared to the wired network.

Accordingly, the TCP protocol has several problems that cause end-to-end performance degradation in the wireless network or the wired and wireless complex network, which makes it difficult to use it in the network.

Meanwhile, a wireless link in the wired and wireless complex network has a bit error rate (BER) as high as 10⁻³~10⁻⁶ , a limited bandwidth, and a frequently generated handoff phenomenon, compared to a wire link.

Thus, the packet loss in the wired network is caused by congestion in intermediate routers, whereas packet loss in an environment including the wireless link is largely caused by high BER or handoff of the wireless link.

Therefore, a transmitting site in the wireless link must transmit data more rapidly when packet loss is caused. However, the current TCP transmitting site erroneously recognizes that even the packet loss generated in the wireless link is caused by congestion of the network, and performs a congestion control algorithm to lower the data rate of the packet. This results in rapid degradation of TCP protocol performance and lowered efficiency of the network.

Performance degradation occurs when a conventional congestion control algorithm of a TCP protocol is applied to a wired and wireless complex network.

First, data from a corresponding node (CN) is transmitted to a mobile node (MN) via a base station. Although the mobile node sends data along with an acknowledgment to it, the corresponding node will fail to receive an ACK packet for a timeout period as packet loss (Corrupt 1) is caused over the wireless link.

Thus, the corresponding node erroneously recognizes it as congestion in the network, and activates a slow start and congestion avoidance algorithm, which is a congestion control algorithm, to set a size of a cwnd (congestion window) to 1.

The cwnd value is the maximum number of packets which can be transferred over the TCP without an acknowledgment from a correspondent. Accordingly, when the cwnd value is small, packet data rate is correspondingly slow, thereby degrading TCP protocol performance.

In addition, if the mobile node fails to receive the ACK packet relating to the transmitted data within a timeout due to loss of a response to the transmitted data (Corrupt 2) over a wireless link, the congestion control algorithm is activated, thereby greatly degrading the TCP performance of the mobile node as well.

Thus, although congestion does not actually occur in the network, the TCP performance is greatly degraded due to high packet loss rate of the wireless network.

In the case of the wired and wireless complex network, the packet loss in the wired network is caused by congestion in the intermediate routers, whereas packet loss in an environment including the wireless link is largely caused by high BER or handoff of the wireless link.

Therefore, although a transmitting site needs to transmit the packet more rapidly when the packet loss in the wireless link occurs, a conventional TCP transmitting site erroneously recognizes that even the packet loss in the wireless link is caused by congestion in the network, and performs a congestion control algorithm to lower the data rate of the TCP. This results in rapidly degraded TCP protocol performance and lowered efficiency of the network.

The following patents are considered to be generally pertinent to the present invention, but are burdened by the disadvantages set forth above: U.S. Patent No. 6,711,147 to Barnes *et al.,* entitled *MERGED PACKET SERVICE AND MOBILE INTERNET PROTOCOL,* issued on March 23, 2004; U.S. Patent No. 6,707,801 to Hsu, entitled *METHOD AND APPARATUS FOR DATA TRANSPORT IN A WIRELESS COMMUNICATION SYSTEM,* issued on March 16, 2004; U.S. Patent No. 6,704,571 to Moon, entitled *REDUCING DATA LOSS DURING CELL HANDOFFS,* issued on March 9, 2004; U.S. Patent No. 6,681,115 to McKenna *et al.,* entitled *COMMUNIQUE SUBSCRIBER HANDOFF BETWEEN A NARROWCAST CELLULAR COMMUNICATION NETWORK AND A POINT-TO-POINT CELLULAR COMMUNICATION NETWORK,* issued on January 20, 2004; U.S. Patent No. 6,701,150 to Huang *et al.,* entitled *NETWORK DRIVEN CELL SWITCHING AND HANDOFF WITH LOAD BALANCING FOR WIRELESS SYSTEMS,* issued on March 2, 2004; U.S. Patent No. 6,654,359 to La Porta *et al.,* entitled *WIRELESS ACCESS TO* *PACKET-BASED NETWORKS,* issued on November 25, 2003; U.S. Patent No. 6,611,547 to Rauhala, entitled *METHOD OF AVOIDING PACKET LOSS AT A HANDOVER IN A PACKET-BASED TELECOMMUNICATIONS NETWORK AND HANDOVER METHOD,* issued on August 26, 2003; U.S. Patent No. 5,530,693 to Averbuch *et al.,* entitled *METHOD AND APPARATUS FOR PERFORMING HANDOFF IN A PACKET DATA COMMUNICATION SYSTEM,* issued on June 25, 1996; U.S. Patent No. 6,522,880 to Verma *et al.,* entitled *METHOD AND APPARATUS FOR HANDOFF OF A CONNECTION BETWEEN NETWORK DEVICES,* issued on February 18, 2003; U.S. Patent No. 6,466,556 to Boudreaux, entitled *METHOD OF ACCOMPLISHING HANDOVER OF PACKET DATA FLOWS IN A WIRELESS TELECOMMUNICATIONS SYSTEM,* issued on October 15, 2002; U.S. Patent No. 6,646,987 to Qaddoura, entitled *METHOD AND SYSTEM FOR TRANSMISSION CONTROL PROTOCOL (TCP) PACKET LOSS RECOVERY OVER A WIRELESS LINK,* issued on November 11, 2003; and U.S. Patent No. 6,625,118 to Hadi Salim *et al.,* entitled *RECEIVER BASED CONGESTION CONTROL,* issued on September 23, 2003.

### SUMMARY OF THE INVENTION

The present invention solves the aforementioned conventional problems, and it is an object of the present invention to provide a packet transmission control method that is capable of rapidly restoring a packet data rate using a bind update message of MIPv6 in a mobile node upon handoff of the mobile node in an Ipv6 based wireless network, thereby rapidly recovering from TCP packet loss caused upon handoff of the mobile node.

According to an aspect of the present invention, there is provided a method for controlling packet transmission in a corresponding node using a bind update message upon handoff of a mobile node in an IPv6 based wireless network, the method including the steps of: when retransmission timeout occurs after transmitting a packet via a TCP connection established with an arbitrary mobile node, storing a currently set congestion control parameter; retrieving each of the TCP connections established with the relevant mobile node so as to modify the currently set congestion control parameter to form a congestion control value, and performing congestion control; and, when a bind update message resulting from performance of the handoff from the mobile node is received, retrieving each TCP connection established with the relevant mobile node, and restoring the congestion control parameter to a value stored before performance of congestion control.

According to another aspect of the present invention, there is provided a method for controlling packet transmission in a mobile node using a bind update message upon handoff of a mobile node in an IPv6 based wireless network, the method including the steps of: when retransmission timeout occurs after transmitting a packet via a TCP connection established with an arbitrary corresponding node, storing a currently set congestion control parameter; retrieving each of the TCP connections established with the relevant corresponding node so as to modify the currently set congestion control parameter to form a congestion control value, and performing congestion control; when performing handoff, transmitting the bind update message to the corresponding node; and when the bind update message is transmitted, retrieving each of the TCP connections established with the mobile node to restore a congestion control parameter to a value stored before performance of congestion control.

According to a further aspect of the present invention, there is provided a method for controlling packet transmission using a bind update message upon handoff of a mobile node in an IPv6 based wireless network, the method including the steps of: when retransmission timeout occurs after transmitting a pakket via a TCP connection established with an arbitrary mobile node, storing a currently set congestion control parameter by means of an arbitrary corresponding node; retrieving, by means of the corresponding node, each of the TCP connections established with the relevant mobile node so as to modify the currently set congestion control parameter to form a congestion control value, and performing congestion control; when a retransmission timeout occurs after transmitting a packet via a TCP connection established with an arbitrary corresponding node, storing a currently set congestion control parameter by means of the mobile node; retrieving, by means of the mobile node, each of the TCP connections established with the relevant corresponding node so as to modify the currently set congestion control parameter to form the congestion control value, and performing the congestion control; transmitting the bind update message to the corresponding node by means of the mobile node when performing the handoff; when the bind update message is transmitted, retrieving by means of the mobile node each TCP connection established with the mobile node to restore the congestion control parameter to a value stored before performance of the congestion control; and, when the bind update message due to performance of the handoff from the mobile node is received, retrieving by means of the corresponding node each TCP connection established with the relevant mobile node to restore the congestion control parameter to a value stored before performance of the congestion control.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
Fig. 1 is a diagram explaining the handoff of a mobile node in a wired and wireless complex network;
Fig. 2 is a diagram showing a cause of performance degradation occurring when a conventional congestion control algorithm of a TCP protocol is applied to a wired and wireless complex network;
Fig. 3 is a diagram of a protocol stack implemented in a corresponding node for performing a packet transmission control method using a bind update message according to an embodiment of the present invention;
Fig. 4 is a detailed diagram of a trigger signal supply module and a trigger-performing module shown in Fig. 3;
Fig. 5 is a diagram illustrating an example of tcpcb according to an embodiment of the present invention;
Fig. 6 is a flowchart illustrating the operation of performing packet transmission control using a bind update in a corresponding node according to an embodiment of the present invention;
Fig. 7 is a flowchart illustrating the operation performed by a trigger signal supply module of a corresponding node according to an embodiment of the present invention;
Fig. 8 is a flowchart illustrating the operation of a trigger-performing module according to an embodiment of the present invention;
Fig. 9 is a flowchart illustrating the operation of a congestion adjustment module according to an embodiment of the present invention;
Fig. 10 is a diagram of a protocol stack implemented in both a mobile node and a corresponding node for performing a packet transmission control method using a bind update message according to another embodiment of the present invention;
Fig. 11 is a diagram of a trigger signal supply module and a trigger-performing module of the mobile node shown in Fig. 10;
Fig. 12 is a flowchart illustrating the operation of performing packet transmission control using a bind update message in a mobile node and a corresponding node according to another embodiment of the present invention;
Fig. 13 is a flowchart illustrating the operation performed by a trigger signal supply module of a mobile node according to another embodiment of the present invention; and
Fig. 14 is a flowchart illustrating the operation performed by a trigger-performing module of a mobile node according to another embodiment of the present invention.

### DESCRIPTION OF THE PREFERRED EMBODIMENTS

Hereinafter, a method of controlling packet transmission in a corresponding node to a mobile node in an IPv6 based wireless network according to the present invention will be described in detail with reference to the accompanying drawings.

According to the present invention, in a wired and wireless integration environment using a mobile IPv6, bind update information of the mobile IPv6 is utilized to solve the problem of degraded performance of an end-to-end TCP protocol by packet loss due to handoff in the wireless network.

That is, when handoff occurs as the mobile node moves into a different subnet, a corresponding node triggers congestion control of TCP in a transmission layer using a bind update message of a network layer, which is transferred to the corresponding node by the mobile node.

In addition, if it is applied to a corresponding node of the wired network, it is possible to design without imparting a heavy load to the mobile node where a resource, such as power, is critical.

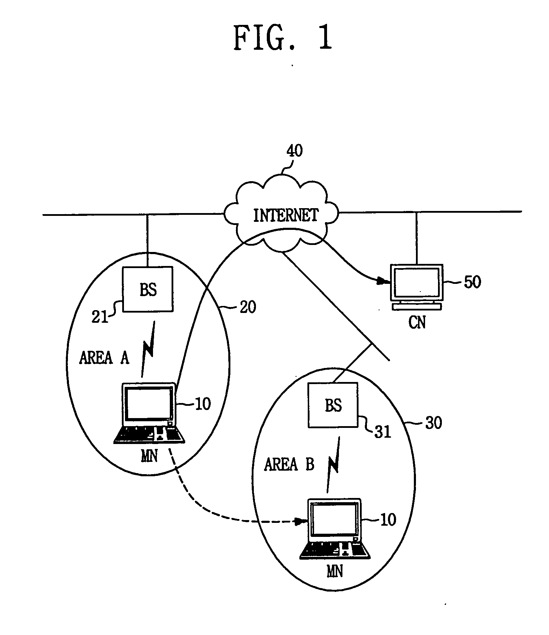

Fig. 1 is a diagram explaining the handoff of a mobile node in a wired and wireless complex network.

Referring to Fig. 1, the figure shows the case where a mobile node 10 hands off from an area A 20 to an area B 30. The mobile node 10 is connected to an Internet 40 via base stations (BSs) 21 and 31 located in the area A 20 and the area B 30, respectively, in order to perform TCP communication with a corresponding node 50, which provides Internet services.

Recently, as the distribution of mobile terminals has increased, the demand of users for the use of Internet services with wireless terminals any time and anywhere has also increased.

However, TCP, which is conventionally used for data transmission between a mobile node and a corresponding node, is designed only for a wired network and a fixed terminal, each having a relatively low packet loss rate.

The wired network has a low packet loss rate and less occurrence of disconnection compared to the wireless network. Thus, packet loss in the wired network is largely caused by congestion due to buffer overflow and the like in intermediate nodes of the network.

Accordingly, in a TCP protocol, the amount of data introduced into the network is decreased by execution of a congestion control algorithm, such as slow start and congestion avoidance, in order to provide reliable services, such that congestion does not occur.

Meanwhile, the wireless network or the wired and wireless complex network has a low performance, a long end-to-end latency, and a high packet loss rate, and frequent generation of packet loss due to handoff, compared to the wired network.

Accordingly, the TCP protocol has several problems that cause end-to-end performance degradation in the wireless network or the wired and wireless complex network, which makes it difficult to use it in the network.

Meanwhile, a wireless link in the wired and wireless complex network has a BER (Bit Error Rate) as high as 10⁻³~10⁻⁶ , a limited bandwidth, and a frequently generated handoff phenomenon, compared to a wire link.

Thus, the packet loss in the wired network is caused by congestion in intermediate routers, whereas packet loss in an environment including the wireless link is largely caused by high BER or handoff of the wireless link.

Therefore, a transmitting site in the wireless link must transmit data more rapidly when packet loss is caused. However, the current TCP transmitting site erroneously recognizes that even the packet loss generated in the wireless link is caused by congestion of the network, and performs a congestion control algorithm to lower the data rate of the packet. This results in rapid degradation of TCP protocol performance and lowered efficiency of the network.

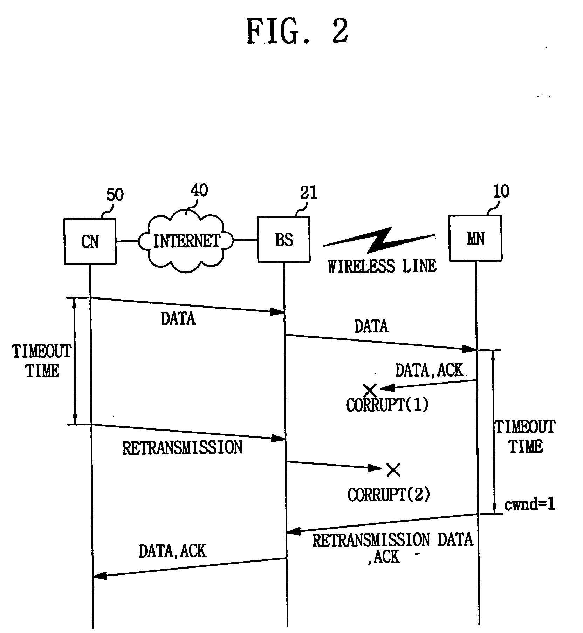

Fig. 2 shows a cause of performance degradation occurring when a conventional congestion control algorithm of a TCP protocol is applied to a wired and wireless complex network.

First, data from a corresponding node (CN) 50 is transmitted to a mobile node (MN) 10 via Internet 40 and base station 21. Although the mobile node 10 sends data along with an acknowledgment to it, the corresponding node 50 will fail to receive an ACK packet for a timeout period as packet loss (Corrupt 1) is caused over the wireless link.

Thus, the corresponding node 50 erroneously recognizes it as congestion in the network, and activates a slow start and congestion avoidance algorithm, which is a congestion control algorithm, to set a size of a cwnd (congestion window) to 1.

The cwnd value is the maximum number of packets which can be transferred over the TCP without an acknowledgment from a correspondent. Accordingly, when the cwnd value is small, packet data rate is correspondingly slow, thereby degrading TCP protocol performance.

In addition, if the mobile node 10 fails to receive the ACK packet relating to the transmitted data within a timeout due to loss of a response to the transmitted data (Corrupt 2) over a wireless link, the congestion control algorithm is activated, thereby greatly degrading the TCP performance of the mobile node 10 as well.

Thus, although congestion does not actually occur in the network, the TCP performance is greatly degraded due to high packet loss rate of the wireless network.

In the case of the wired and wireless complex network, the packet loss in the wired network is caused by congestion in the intermediate routers, whereas packet loss in an environment including the wireless link is largely caused by high BER or handoff of the wireless link.

Therefore, although a transmitting site needs to transmit the packet more rapidly when packet loss in the wireless link occurs, a conventional TCP transmitting site erroneously recognizes that even the packet loss in the wireless link is caused by congestion in the network, and performs a congestion control algorithm to lower the data rate of the TCP. This results in rapidly degraded TCP protocol performance and lowered efficiency of the network.

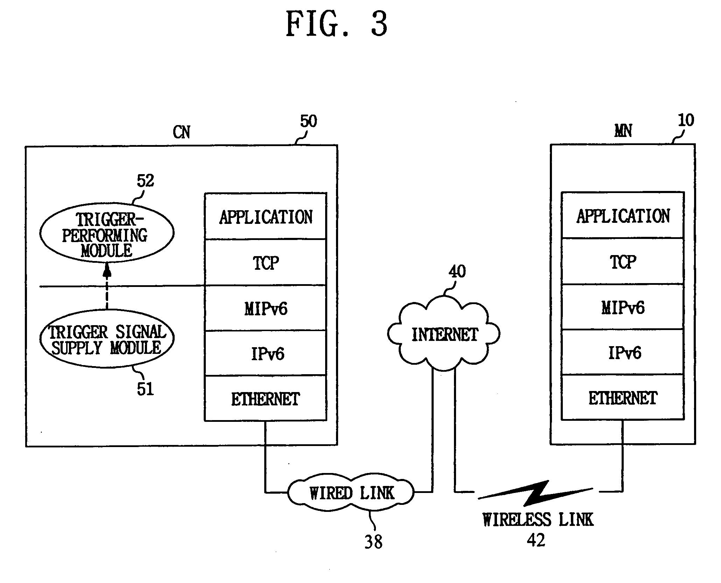

Fig. 3 is a diagram of a protocol stack implemented in a corresponding node for performing a packet transmission control method using a bind update message according to an embodiment of the present invention.

Referring to Fig. 3, a typical protocol stack structure is additionally provided with a trigger signal supply module 51 operating in a network layer, and a trigger-performing module 52 operating in a TCP layer.

The typical protocol stack structure is to a typical stack structure of a protocol performing a TCP communication, and has a stack structure of an Ethernet layer, an IPv6 layer, an MIPv6 layer, a TCP layer, and an application layer. The corresponding node 50 communicates with the Internet 40 via a wired link 38, while the mobile node 10 communicates with the Internet 40 via a wireless link 42.

In the embodiment of the present invention, the corresponding node 50 having this stack structure is further implemented with the trigger signal supply module 51 operating in the network layer and the trigger-performing module 52 operating in the TCP layer.

If the corresponding node 50 receives a bind update message sent by the mobile node 10, the trigger signal supply module 51 converts this information to a trigger signal, and transfers the trigger signal to the trigger-performing module 52 in the TCP layer.

After receiving the trigger signal from the trigger signal supply module 51, the trigger performing module 52 searches, in a tcpcb list of the TCP, tcpcbs (TCP control blocks) of all TCP connections in communication with the mobile node to confirm a cwnd (congestion window size) value for each searched connection, and adjusts this parameter depending on whether or not retransmission occurs such that the packet is retransmitted, if required.

The tcpcb is a structure wherein information relating to a relevant connection is stored for managing each connection in the TCP protocol. The tcpcbs of all TCP connections are stored in the form of a linked list or table.

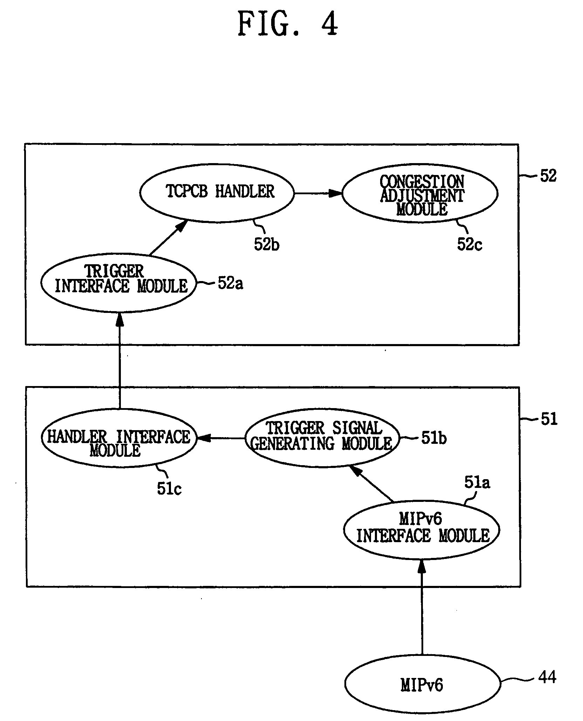

Fig. 4 is a detailed diagram of the trigger signal supply module 51 and the trigger-performing module 52 shown in Fig. 3.

Referring to Fig. 4, the trigger signal supply module 51 has an MIPv6 interface module 51a which serves as an interface to an MIPv6 module 44, a trigger signal generating module 51b which generates a trigger signal to be forwarded to a TCP layer, and a handler interface module 51c which forwards the trigger signal to the TCP layer.

The trigger-performing module 52 has of a trigger interface module 52a which receives the trigger signal from trigger signal supply module 51, a tcpcb handler module 52b which searches, in the tcpcb list, for each of the TCP connections associated with the trigger signal, and a congestion adjustment module 52c which manages congestion control for the TCP connection.

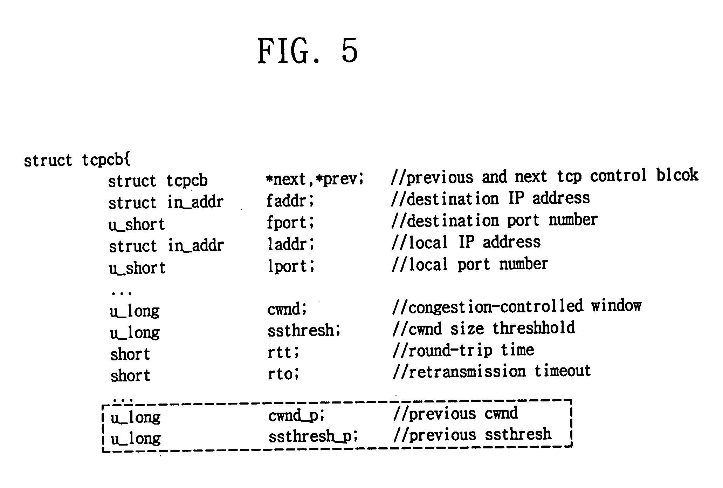

Fig. 5 is a diagram illustrating an example of a tcpcb according to the present invention.

Referring to Fig. 5, the tcpcb includes various parameter data for various packet transmission controls. These parameter data are used during a typical TCP communicating operation, and an explanation thereof is schematically discussed as follows:
*next and *prev indicate a previous tcpcb (TCP control block) and the next tcpcb, respectively;
faddr indicates a destination IP address;
fport indicates a destination port number;
laddr indicates a local IP address;
lport indicates a local port number;
cwnd indicates a congestion-controlled window;
ssthresh indicates a maximum size of the cwnd (a cwnd size threshold);
rtt indicates round-trip time; and
rto indicates a retransmission timeout.

As represented by "..." in the list contained in Figure 3, there are many omitted fields.

In addition, as denoted by a surrounding dotted line, the tcpcb is further provided with cwnd_p, which is a parameter representing a cwnd value before congestion control is performed, and ssthresh_p, which is a parameter representing a maximum cwnd value before congestion control is performed.

In order to trigger an already performed congestion control using the bind update message, an item called cwnd_p (previous cwnd) is added to the tcb of the TCP layer to store a cwnd value immediately before the cwnd is changed to 1, and an item called ssthresh_p (previous sshresh) is added to store a ssthresh (slow start threshold) value immediately before the cwnd is changed to 1. The ssthresh is a maximum value that the cwnd can have, which is a value changed dependent on congestion control execution of the TCP.

Changing the cwnd to 1 is activated by a retransmission timeout. This often occurs by virtue of the handoff of the mobile node. The cwnd and the ssthresh before retransmission is generated are recorded and, if a trigger signal is received, the cwnd is returned to the cwnd_p so that a data rate of TCP is used to rapidly recover a data rate prior to performing congestion control.

The ssthresh must be also returned to its value before congestion control, while the value of the cwnd is returned to its value before congestion control.

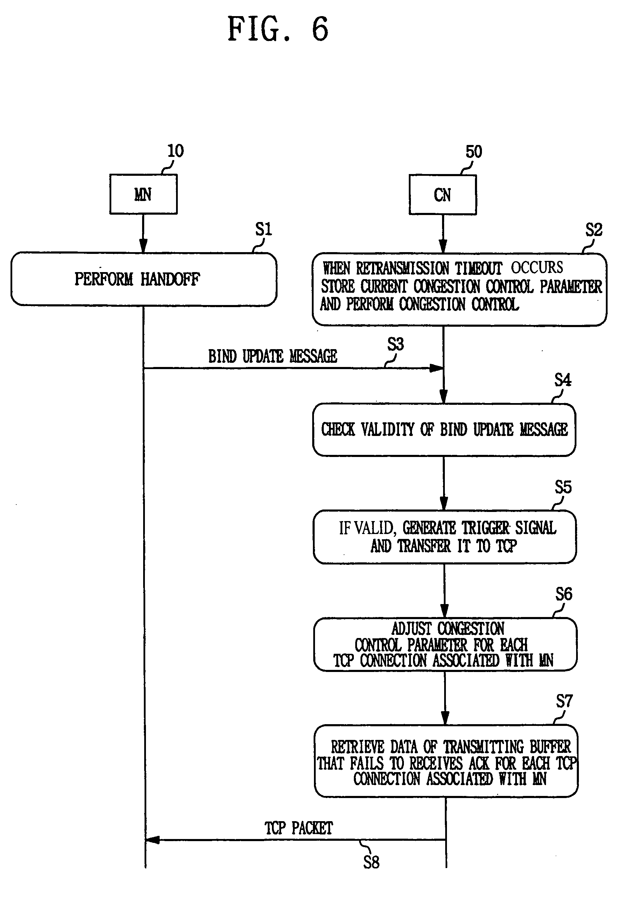

Fig. 6 is a flowchart illustrating the operation of performing packet transmission control using a bind update message in the corresponding node according to an embodiment of the present invention.

Referring to Fig. 6, the mobile node (MN) 10 performs a handoff (S1). In response thereto, a retransmission timeout occurs in the corresponding node (CN) 50 that is transmitting a packet to the mobile node 10. Upon the occurrence of the retransmission timeout, the corresponding node 50 stores the current congestion control parameter and performs congestion control (S2). After performing the handoff, the mobile node (MN) 10 transmits the bind update message to the corresponding node 50, with which the mobile node is performing TCP communication before the handoff (S3). When receiving the bind update message supplied from the mobile node (MN) 10 after the handoff, the corresponding node (CN) 50 checks the validity of the bind update message (S4). If the message is a valid bind update message, the trigger signal supply module 51 generates a trigger signal to be forwarded to the TCP layer based on information of the message, and forwards it to the trigger-performing module 52 of the TCP layer (S5).

When the trigger-performing module 52 receives the trigger signal from the trigger signal supply module 51, the tcpcb handler module 52b retrieves all TCP connections in communication with a relevant mobile node (MN) 10 based on the information, and the congestion adjustment module 52c adjusts the cwnd and the ssthresh, which are congestion control parameters, to values before congestion control is performed (S6). When the congestion adjustment module 52c adjusts the cwnd and the ssthresh to their values before performance of congestion control, the TCP module retrieves data from a transmitting buffer, which has failed to receive an acknowledgment signal ack relative to each TCP connection (S7), and retransmits the TCP packet, which is stored in the transmitting buffer, to the relevant mobile node (MN) 10 (S8).

Thus, since the cwnd and the ssthresh in the corresponding node (CN) 50 are returned to their values before congestion control, it is possible to transmit the data at a data rate before congestion control, which improves the performance of TCP. Meanwhile, even the mobile node (MN) 10, which is a receiving site, can recover the lost data rapidly.

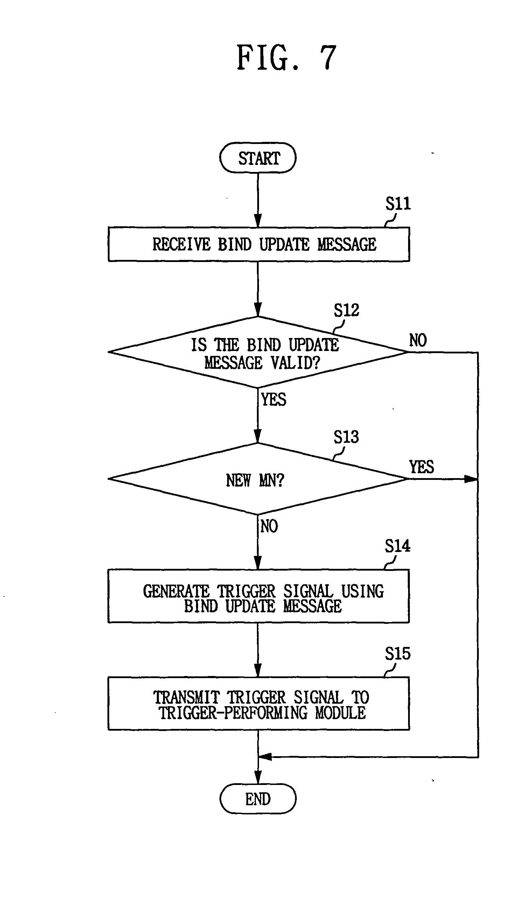

Fig. 7 is a flowchart illustrating the operation of performing packet transmission control by means of the trigger signal supply module of the corresponding node.

Referring to Fig. 7, when the corresponding node 50 receives the bind update message from the mobile node 10, the MIPv6 interface module 51a receives the bind update message of the mobile node 10 via the MIPv6 module (S11). The MIPv6 interface module 51a checks whether the received bind update message is valid or not (S12). If the received BU message is valid, the MIPv6 interface module 51a confirms whether the mobile node 10 that has sent the message is a new connected node or an existing node present in a cache (S13). If the received BU message is not valid, the processing of this BU message ends.

If the mobile node is a new node, the MIPv6 interface module 51a ignores the node since there is no TCP connection in communication with this node, and processes the next bind update message. If the mobile node is not a new node but is an existing connected node, the MIPv6 interface module 51a causes the trigger signal generating module 51b to generate a trigger signal for triggering congestion control using the received bind update message (S 14).

The handler interface module 51c transmits the trigger signal generated by the trigger signal generating module 51b to the trigger-performing module 52 in the TCP layer (S 15).

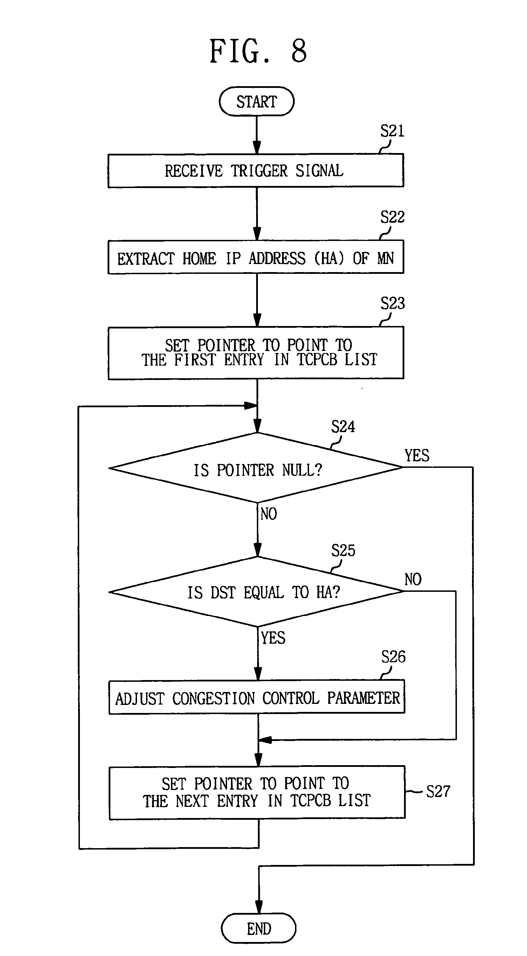

Fig. 8 is a flowchart illustrating the operation of the trigger-performing module.

Referring to Fig. 8, the trigger interface module 52a receives the trigger signal from the handler interface module 51c of the trigger signal supply module 51 (S21). The trigger interface module 52a abstracts the HA (Home Address), which is a home IP address of the MN, from the trigger signal, and transfers the HA to the tcpcb handler module 52b (S22).

The tcpcb handler module 52b initially sets a pointer to point to a first entry in the tcpcb list so that all TCP connections corresponding to the HA received from the trigger interface module 52a are searched (S23).

The module 52b then determines whether or not a value of the pointer is null (S24). If the value is not null but is pointing to a specific entry, the module 52b determines whether a destination address (DST) of the entry is equal to the HA (S25). If it is determined that the DST is not equal to the HA (S24), the module 52b sets the pointer to the next entry in the list (S27). On the other hand, if it is determined that the DST is equal to the HA, the tcpcb handler module 52b adjusts the congestion control parameter for the relevant TCP connection (S26). When adjustment of the congestion control parameter is completed for one entry, the module 52b designates the next entry in the tcpcb list to a tcb counter (S27). The latter process is repeated for each entry in the list until the pointer is null. If the pointer is null (S24), which means that retrieval up to the end of the tcpcb list has been completed, the process ends.

Thus, the tcpcb handler module 52b sequentially retrieves all TCP connections in the tcpcb list and, for any TCP connection with a destination of HA, adjusts the congestion control parameter to its value before congestion control.

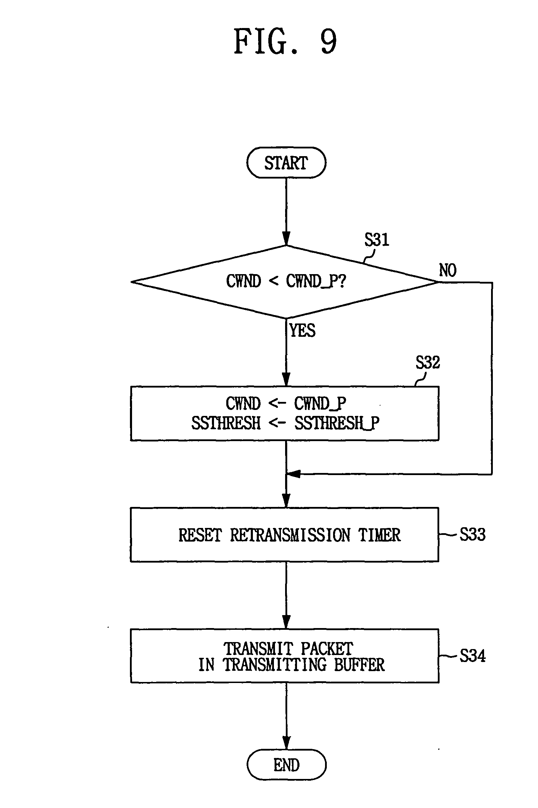

Fig. 9 is a flowchart illustrating the operation of a congestion adjustment module according to an embodiment of the present invention.

Referring to Fig. 9, for each of the TCP connections, the congestion adjustment module 52c determines whether or not the cwnd value is smaller than cwnd_p value (S31). If it is determined to be smaller, it means that timeout of the TCP connection has occurred due to handoff.

In this case, in order to recover the data rate of the TCP, the cwnd value is set to a value of cwnd_p, which is its value immediately before the cwnd value is changed to 1, and the ssthresh is set to a value of ssthreth_p before the performance of congestion control (S32). In addition, a retransmission timer is reset (S33).

On the other hand, if the module 52c determines that the cwnd value is not smaller than the cwnd_p in step S31, step S32 is skipped, and only the retransmission timer is reset in step S33.

After the congestion control parameter is thus modified, a packet present in a transmitting buffer of the TCP connection, which has failed to receive an acknowledgment, is retransmitted so that the mobile node 10 receives a lost packet without retardation (S34).

As indicated above, the method of performing packet transmission control using the bind message in the corresponding node upon handoff of the mobile node has been described. In addition, performance of packet transmission control using the bind message may be applied to the mobile node. That is, it may be applied to the corresponding node only, to the mobile node only, or to both the corresponding node and the mobile node simultaneously. Mainly, it is effectively applied to a data transmitting site.

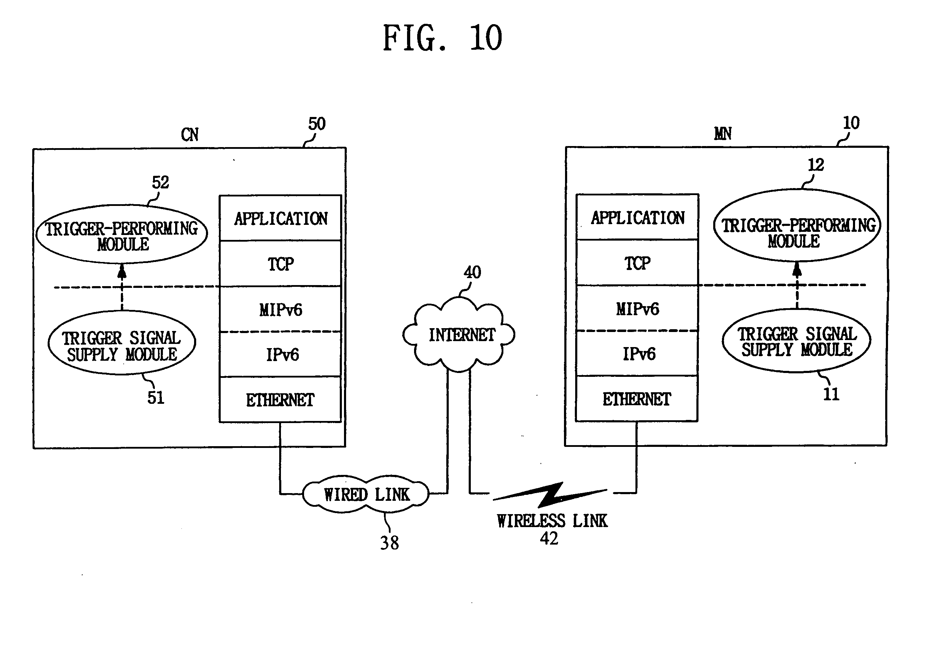

Fig. 10 is a diagram of a protocol stack implemented in both the mobile node and the corresponding node for performing a packet transmission control method using a bind update message according to another embodiment of the present invention.

Referring to Fig. 10, in this embodiment, both the mobile node 10 and the corresponding node 50 are provided with a trigger signal supply module operating in the network layer and a trigger-performing module operating in the TCP layer.

The typical protocol stack structure is a typical stack structure of a protocol performing the TCP communication and has a stack structure of an Ethernet layer, an IPv6 layer, an MIPv6 layer, a TCP layer, and an application layer. The corresponding node communicates with the Internet 40 via a wire link 38, and the mobile node 10 communicates with the Internet 40 via a wireless link 42.

The mobile node 10 transmits a packet via the TCP connection established with an arbitrary corresponding node 50 and, thereafter, if retransmission timeout occurs, the mobile node 10 stores a currently set congestion control parameter. Also, the mobile node 10 retrieves each of the TCP connections established with the relevant corresponding node 50 so as to modify the currently set congestion control parameter to form a congestion control value, and performs congestion control. When the mobile node 10 performs handoff, it transmits a bind update message to the corresponding node 50. After transmitting the bind update message, the mobile node 10 retrieves each of the TCP connections established with the mobile node 10, and restores the congestion control parameter to a value stored before performance of congestion control.

The corresponding node 50 transmits the packet via the TCP connection established with the mobile node 10 and, thereafter, if retransmission timeout occurs, corresponding node 50 stores a currently set congestion control parameter. Also, the corresponding node 50 retrieves each of the TCP connections established with the relevant mobile node 10 so as to modify the currently set congestion control parameter to form a congestion control value, and performs congestion control. When the corresponding node 50 receives a bind update message as a result of handoff from the mobile node 10, it retrieves each of the TCP connections established with the relevant mobile node 10, and restores the congestion control parameter to a value stored before performance of congestion control.

As described in this embodiment, the corresponding node 50 having this stack structure is further provided with the trigger signal supply module 51 operating in the network layer, and the trigger-performing module 52 operating in the TCP layer.

In addition, the mobile node 10 is further provided with the trigger signal supply module 11 operating in the network layer, and the trigger-performing module 12 operating in the TCP layer.

Thus, packet transmission control must be performed in both the corresponding node 50 and mobile node 10 when each of those nodes has the role of a transmitter.

In other words, this embodiment applies to the situation wherein the corresponding node 50 transmits data to the mobile node 10, and the mobile node 10 also transmits data to the corresponding node 50.

That is, in the case where the corresponding node 50 or the mobile node 10 can transmit data to a correspondent, if the mobile node 10 performs handoff, the corresponding node 50 performs congestion control when there is no acknowledgment signal received relative to the data transmitted to the mobile node 10 by the corresponding node 50.

Conversely, if the mobile node 10 fails to receive an acknowledgment signal relating to the data transmitted by the mobile node 10 to the corresponding node 50 as a result of a handoff, mobile node 10 performs congestion control as well.

Thus, if a mobile node 10 performs the handoff, the corresponding node 50 needs a packet transmission control using the bind update message, and the mobile node 10 also needs packet transmission control using the bind update message.

A procedure of performing packet transmission control using the bind update message in the thus configured packet transmission control system is as follows:

First of all, after transmitting a packet via a TCP connection established with the arbitrary mobile node 10, the corresponding node 50 stores the currently set congestion control parameter when a retransmission timeout occurs. In addition, the corresponding node 50 retrieves each of the TCP connections established with the relevant mobile node 10 so as to modify the currently set congestion control parameter to form a congestion control value, and performs congestion control.

Meanwhile, after transmitting a packet via a TCP connection established with the arbitrary corresponding node 50, the mobile node 10 stores a currently set congestion control parameter when a retransmission timeout occurs. In addition, the mobile node 10 retrieves each of the TCP connections established with the relevant corresponding node 50, modifies the currently set congestion control parameter to form the congestion control value, and performs congestion control.

If the mobile node 10 performs the handoff, it sends a bind update message to the corresponding node 50. After transmitting the bind update message, the mobile node 10 retrieves each of the TCP connections established with the mobile node, and restores the congestion control parameter to its value before performance of congestion control.

Meanwhile, when receiving a bind update message as a result of performance of the handoff from the mobile node 10, the corresponding node 50 retrieves each of the TCP connections established with the relevant mobile node 10, and restores the congestion control parameter to its value as stored before performance of congestion control.

The packet transmission control in the corresponding node 50 has been described above. That is, the configuration and operation of the trigger signal supply module 51 and the trigger-performing module 52 of the corresponding node 50 have been previously described in connection with Figs. 3 -5 and 7-9, and therefore the explanation will not be repeated. Hereinafter, the configuration and operation of the mobile node 10 will be described.

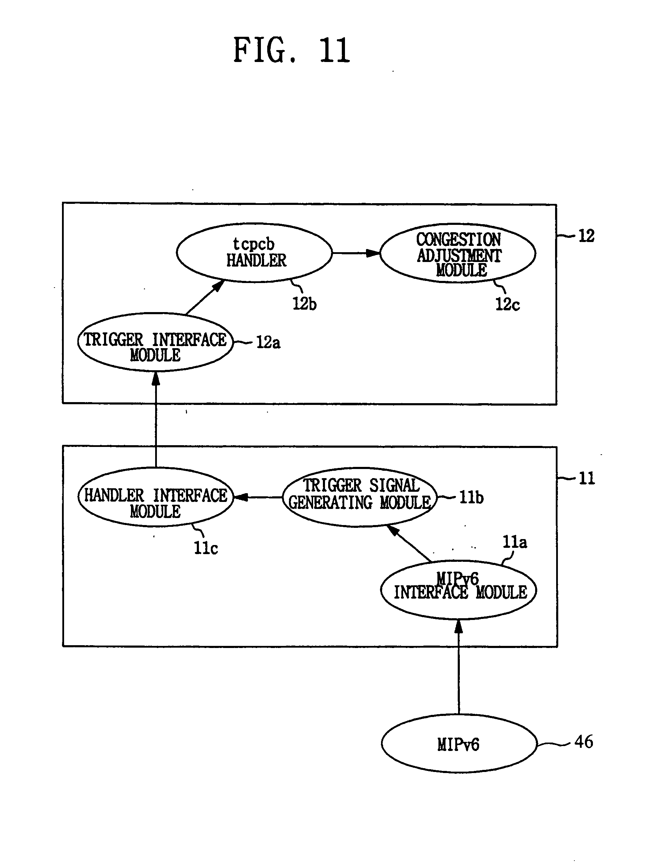

Fig. 11 is a diagram of the trigger signal supply module and the trigger-performing module of the mobile node shown in Fig. 10.

Referring to Fig. 11, when an MIPv6 module 46 transmits a bind message to the mobile node 10, the trigger signal supply module 11 converts this information to a trigger signal and forwards the converted trigger signal to the trigger-performing module 12 of the TCP layer.

The trigger signal supply module 11 has an MIPv6 interface module 11a which acts as an interface to the MIPv6 module 46, a trigger signal generating module 11b which generates a trigger signal to be forwarded to the TCP layer, and a handler interface module 11c which forwards the trigger signal to the TCP layer.

After receiving the trigger signal from the trigger signal supply module 11, the trigger-performing module 12 searches, in the tcpcb list, for the tcpcbs of the TCP connections of all corresponding nodes in communication to confirm cwnd (congestion window size) values of each connection, adjusts this parameter dependent on whether or not retransmission occurs, and retransmits a packet, if required.

The trigger-performing module 12 has a trigger interface module 12a for receiving a trigger signal from the trigger signal supply module 11, a tcpcb handler module 12b for searching, in the tcpcb list, for each of TCP connections associated with the trigger signal, and a congestion adjustment module 12c for managing congestion control of the TCP connection.

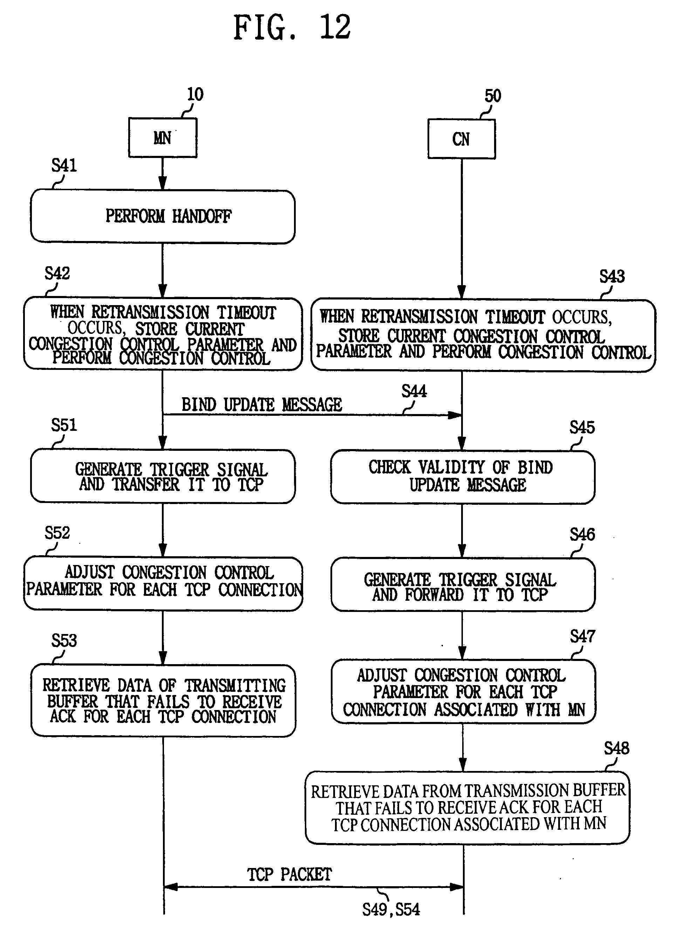

Fig. 12 is a flowchart illustrating the operation of performing packet transmission control using a bind update message in both the mobile node and the corresponding node according to another embodiment of the present invention.

Referring to Fig. 12, the mobile node (MN) 10 performs handoff (S41). At this time, if the mobile node 10 is sending a packet to an arbitrary correspending node 50, it fails to receive an acknowledgment signal from the corresponding node 50 due to the performed handoff, such that retransmission timeout occurs. When the retransmission timeout occurs, the mobile node 10 stores a current congestion control parameter and then performs congestion control (S42).

If the corresponding node 50 fails to receive an acknowledgment signal from the relevant mobile node 10 because the mobile node 10 sending the pakket has performed a handoff, a retransmission timeout occurs. When the retransmission timeout occurs, the corresponding node 50 stores the current congestion control parameter and performs congestion control (S43). The mobile node (MN) 10, after performing handoff, transmits the bind update message to the corresponding node 50 with which the mobile node has carried out TCP communication before the handoff (S44).

When the corresponding node (CN) 50 receives the bind update message sent after handoff by the mobile node (MN) 10, the trigger signal supply module 51 checks the validity of the bind update message (S45). If the BU message is valid, the trigger signal supply module 51 generates a trigger signal to be forwarded to the TCP based on the information of this message, and forwards it to the trigger-performing module 52 of the TCP layer (S46).

When the trigger-performing module 52 receives the trigger signal from the trigger signal supply module 51, the tcpcb handler module 52b retrieves all TCP connections in communication with the relevant mobile node (MN) 10 based on the information, and the congestion adjustment module 52c adjusts the cwnd and the ssthresh, which are congestion control parameters, to their values before performance of congestion control (S47). When the congestion adjustment module 52c adjusts the cwnd and the ssthresh to their values before performance of congestion control, the TCP module retrieves data from the transmitting buffer, which fails to receive an acknowledgment signal (ACK) for each TCP connection (S48), and retransmits a TCP packet stored in the transmitting buffer to the relevant mobile node (MN) 10 (S49).

Thus, as the cwnd and the ssthresh of the corresponding node (CN) 50 can be restored to their values before congestion control, it is possible to transmit the data at the rate prior to congestion control, which improves the performance of the TCP. Meanwhile, the mobile node (MN) 10 as the receiving site can also recover lost data rapidly.

In the case where the mobile node 10 transmits the bind update message to the corresponding node 50, the trigger signal supply module 11 generates a trigger signal to be forwarded to the TCP based on the information of this message, and forwards it to the trigger-performing module 12 of the TCP layer (S51).

In the trigger-performing module 12, when the trigger interface module 12a receives the trigger signal from the trigger signal supply module 11, the tcpcb handler module 12b retrieves all TCP connections in communication with the relevant mobile node (MN) 10 based on the information, and the TCP congestion adjustment module 12c adjusts the cwnd and the ssthresh, which are congestion control parameters, to their values before performance of congestion control (S52). When the congestion adjustment module 12c adjusts the cwnd and the ssthresh to their values before occurrence of a retransmission timeout, it calls the retransmission module of the TCP to thereby retrieve data from the transmitting buffer that fails to receive an acknowledgment signal (ACK) for each TCP connection (S53), and retransmits the TCP packet stored in the transmitting buffer to the relevant corresponding node 50 (S54).

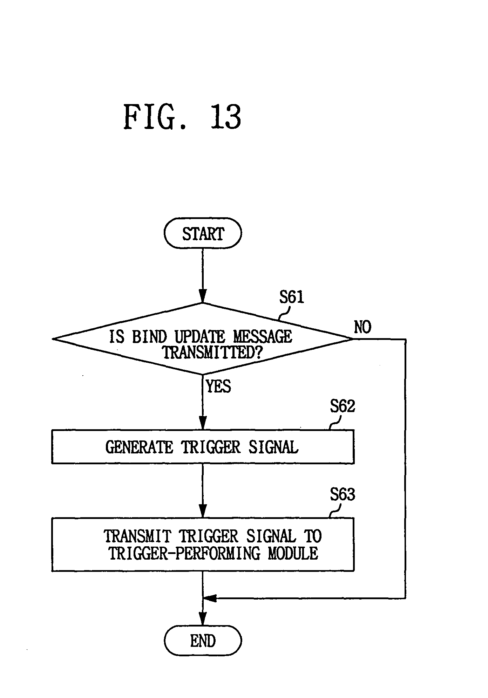

Fig. 13 is a flowchart illustrating the operation performed by the trigger signal supply module of the mobile node according to another embodiment of the present invention.

Referring to Fig. 13, as the bind update message is transmitted from the MIPv6 module to the corresponding node 50, the MIPv6 interface module 11 a determines whether or not the BU message from the MIPv6 module is transferred to the corresponding node 50 (S61). If it is determined that the BU message is not transferred, the process ends. On the other hand, if it is determined that the BU message is transferred, the trigger signal generating module 11b generates a BU-trigger signal for triggering congestion control performed due to the handoff (S62). The handler interface module 11c then transmits the trigger signal generated in the trigger signal generating module 11b to the trigger-performing module 12 of the layer (S63).

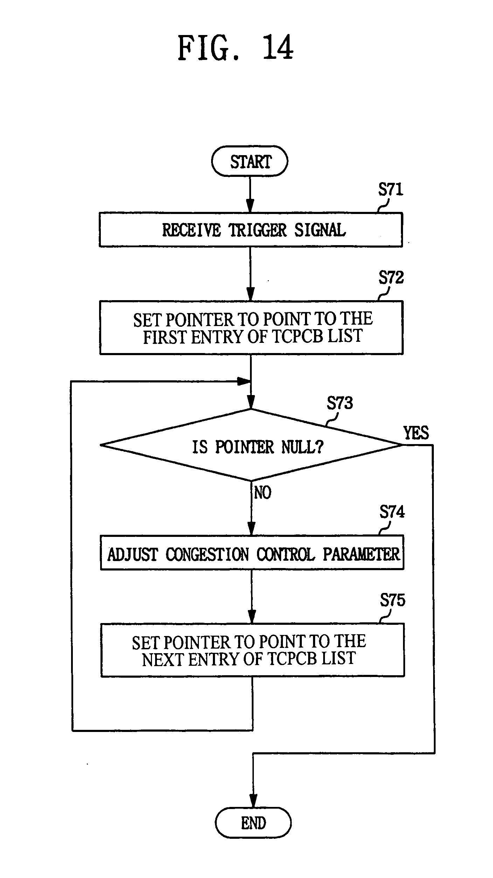

Fig. 14 is a flowchart illustrating the operation performed by the trigger-performing module of the mobile node according to another embodiment of the present invention.

Referring to Fig. 14, the trigger interface module 52a receives the trigger signal from the handler interface module 11c of the trigger signal supply module 11 (S71).

When the trigger interface module 52a receives the trigger signal, the tcpcb handler module 52b sets the pointer to point to the first entry in the tcpcb list in order to search all TCP connections as the packet transmission control is needed for all TCP connections connected to the tcpcb handler module 52b (S72).

The tcpcb handler module 52b determines whether or not the pointer is null (S73). If it is determined that the pointer is null, the process ends. On the other hand, if it is determined that the pointer is not null but is pointing to a specific entry, the tcpcb handler module 52b adjusts the congestion control parameter for the relevant TCP connection (S74). Once the adjustment of the congestion control parameter is completed for one entry, the tcpcb handler module 52b sets the tcb pointer to point to the next entry in the tcpcb list (S75), and performs packet transmission control for all TCP connections connected to the tcpcb handler module 52b.

Thus, the tcpcb handler module 52b retrieves sequentially all TCP connections in the tcpcb list, and adjusts the congestion control parameter to its value before congestion control for the TCP connection established with the tcpcb handler module 52b.

An explanation on the operation of the congestion adjustment module 52c will be omitted since it is the same as that described in connection with Fig. 9.

According to the present invention, in a wired and wireless integration environment based on mobile IPv6, after congestion control is performed by virtue of occurrence of packet loss upon handoff of the mobile node 10, the system can be rapidly restored to a state before TCP congestion control, thereby reducing degradation of transfer quality due to handoff of the mobile node 10.

Although preferred embodiments of the present invention have been described, it will be understood by those skilled in the art that the present invention should not be limited to the described preferred embodiments. Rather, various changes and modifications can be made within the spirit and scope of the present invention, as defined by the following claims.

## Claims

1. A method for controlling packet transmission in a corresponding node using a bind update message upon handoff from a mobile node in an IPv6 based wireless network, comprising the steps of:
when retransmission timeout occurs after transmitting a packet via a transmission control protocol (TCP) connection established with an arbitrary mobile node, storing a currently set congestion control parameter;
retrieving each TCP connection established with a relevant mobile node so as to modify the currently set congestion control parameter to form a congestion control value, and performing congestion control; and
when the bind update message upon handoff from the mobile node is received, retrieving said each TCP connection established with the relevant mobile node, and restoring the congestion control parameter to a value stored before performance of the congestion control.

2. The method according to claim 1, wherein the restoring step includes the steps of:
checking validity of the received bind update message;
when the bind update message is valid, generating a trigger signal for triggering the congestion control; and
in response to the generated trigger signal, retrieving said each TCP connection established with the relevant mobile node so as to reset the congestion control parameter to the value stored before performance of the congestion control.

3. The method according to claim 1, wherein the congestion control parameter includes:
a congestion control window (cwnd); and
a maximum congestion control window (ssthresh).

4. The method according to claim 1, further comprising the step, after performing the step of restoring the congestion control parameter to the value stored before performance of the congestion control, of retransmitting to the relevant mobile node data from a transmitting buffer which has failed to receive an acknowledgment signal relative to said each TCP connection established with the relevant mobile node.

5. A method for controlling packet transmission in a mobile node using a bind update message upon handoff from the mobile node in an IPv6 based wireless network, comprising the steps of:
when retransmission timeout occurs after transmitting a packet via a transmission control protocol (TCP) connection established with an arbitrary corresponding node, storing a currently set congestion control parameter;
retrieving each TCP connection established with a relevant corresponding node so as to modify the currently set congestion control parameter to form a congestion control value, and performing congestion control;
when performing the handoff , transmitting the bind update message to the relevant corresponding node; and
when the bind update message is transmitted, retrieving each TCP connection established with the mobile node, and restoring the congestion control parameter to a value stored before performance of the congestion control.

6. The method according to claim 5, wherein the restoring step includes the steps of:
transmitting the bind update message to the relevant corresponding node when the handoff is performed;
when the bind update message is transmitted, generating a trigger signal for triggering the congestion control; and
retrieving said each TCP connection established with the mobile node so as to reset the congestion control parameter to the stored value in response to the generated trigger signal.

7. The method according to claim 5, wherein the congestion control parameter includes:
a congestion control window (cwnd); and
a maximum congestion control window (ssthresh).

8. The method according to claim 5, further comprising the step, after performing the step of restoring the congestion control parameter to the value stored before performance of the congestion control, of retrieving said each TCP connection established with the mobile node, and retransmitting to the relevant corresponding node data from a transmitting buffer which has failed to receive an acknowledgment signal.

9. A method for controlling packet transmission using a bind update message upon handoff from a mobile node in an IPv6 based wireless network, comprising the steps of:
when a retransmission timeout occurs after transmitting a packet via a transmission control protocol (TCP) connection established with an arbitrary mobile node, storing a currently set congestion control parameter by means of an arbitrary corresponding node;
retrieving, by means of the arbitrary corresponding node, each TCP connection established with a relevant mobile node so as to modify the currently set congestion control parameter to form a congestion control value, and performing congestion control;
when a retransmission timeout occurs after transmitting a packet via a TCP connection established with the arbitrary corresponding node, storing a currently set congestion control parameter by means of the mobile node;
retrieving, by means of the mobile node, each TCP connection established with a relevant corresponding node so as to modify the currently set congestion control parameter to form a congestion control value, and performing congestion control;
transmitting the bind update message to the relevant corresponding node by means of the mobile node when performing the handoff;
when the bind update message is transmitted, retrieving, by means of the mobile node, each TCP connection established with the mobile node so as to restore the congestion control parameter to a value stored before performing the congestion control; and
when the bind update message upon handoff from the mobile node is received, retrieving, by means of the corresponding node, said each TCP connection established with the relevant mobile node so as to restore the congestion control parameter to a value stored before performing the congestion control.

10. A system for controlling packet transmission in an IPv6 based corresponding node, comprising:
a transmission control protocol (TCP) module responsive to occurrence of a retransmission timeout after transmitting a packet via a TCP connection established with an arbitrary mobile node for storing a currently set congestion control parameter, for retrieving each TCP connection established with a relevant mobile node so as to modify the currently set congestion control parameter to form a congestion control value, and for performing congestion control;
an MIPv6 module for receiving a bind update message upon performance of a handoff from the relevant mobile node;
a trigger signal supply module for generating a trigger signal for triggering the congestion control performed by the TCP module when the MIPv6 module receives the bind update message; and
a trigger-performing module for retrieving each TCP connection established with the relevant mobile node so as to restore the congestion control parameter to a value stored before performance the congestion control in response to the trigger signal generated by the trigger signal supply module.

11. The system according to claim 10, wherein the trigger signal supply module includes:
an MIPv6 interface module for checking validity of the bind update message received by the MIPv6 module;
a trigger signal generating module responsive to a determination by the MIPv6 interface module that the bind update message is valid for generating the trigger signal for triggering the performed congestion control; and
a handler interface module for providing the trigger signal generated by the trigger signal generating module to the trigger-performing module.

12. The system according to claim 10, wherein the trigger-performing module includes:
a trigger interface module for receiving the trigger signal generated by the trigger signal supply module;
a handler module for retrieving said each TCP connection established with the relevant mobile node in response to the trigger signal received by the trigger interface module; and
a congestion adjustment module for resetting, for each TCP connection retrieved by the handler module, the congestion control parameter to the value stored before performance of the congestion control.

13. The system according to claim 10, wherein the congestion control parameter includes:
a congestion control window (cwnd); and
a maximum congestion control window (ssthresh).

14. A system for controlling packet transmission in an IPv6 based mobile node, comprising:
a transmission control protocol (TCP) module responsive to occurrence of a retransmission timeout is occurred after transmitting a packet via a TCP connection established with an arbitrary corresponding node for storing a currently set congestion control parameter, for retrieving each TCP connection established with a relevant corresponding node so as to modify the currently set congestion control parameter to form a congestion control value, and for performing congestion control;
an MIPv6 module for transmitting a bind update message to the relevant corresponding node when a mobile node performs a handoff;
a trigger signal supply module for generating a trigger signal for triggering the congestion control performed by the TCP module when the MIPv6 module transmits the bind update message; and
a trigger-performing module for retrieving each TCP connection established with the mobile node so as to restore the congestion control parameter to a value stored before performance of the congestion control in response to the trigger signal generated by the trigger signal supply module.

15. A system for controlling packet transmission in an IPv6 based wireless network, comprising:
a mobile node responsive to occurrence of a retransmission timeout after transmitting a packet via a transmission control protocol (TCP) connection established with an arbitrary corresponding node for storing a currently set congestion control parameter for retrieving each TCP connection established with a relevant corresponding node so as to modify the currently set congestion control parameter to form a congestion control value, for performing congestion control, for transmitting a bind update message to the relevant corresponding node when performing a handoff, and responsive to the bind update message being transmitted for retrieving each TCP connection established with the mobile node so as to restore the congestion control parameter to a value stored before performing the congestion control; and
a corresponding node responsive to occurrence of a retransmission timeout after transmitting a packet via a TCP connection established with the mobile node for storing a currently set congestion control parameter, for retrieving each TCP connection established with a relevant mobile node so as to modify the currently set congestion control parameter to form a congestion control value, for performing congestion control, and responsive to reception of the bind update message from the mobile node for retrieving each TCP connection established with the relevant mobile node so as to restore the congestion control parameter to the value stored before performing the congestion control.

16. The system according to claim 15, wherein the mobile node comprises:
a TCP module responsive to occurrence of the retransmission timeout after transmitting the packet via the TCP connection established with the arbitrary corresponding node for storing the currently set congestion control parameter, for retrieving each TCP connections established with the relevant corresponding node so as to modify the currently set congestion control parameter to form the congestion control value, and for performing the congestion control;
an MIPv6 module for transmitting the bind update message to the relevant corresponding node when the mobile node performs the handoff;
a trigger signal supply module for generating a trigger signal for triggering the congestion control performed by the TCP module when the MIPv6 module transmits the bind update message; and
a trigger-performing module responsive to the trigger signal generated by the trigger signal supply module for retrieving said each TCP connection established with the mobile node so as to restore the congestion control parameter to the value stored before performing the congestion control.

17. The system according to claim 15, wherein the corresponding node includes:
a TCP module responsive to occurrence of the retransmission timeout after transmitting the packet via the TCP connection established with the mobile node for storing the currently set congestion control parameter, for retrieving said each TCP connection established with the relevant mobile node so as to modify the currently set congestion control parameter to form the congestion control value, and for performing the congestion control;
an MIPv6 module for receiving the bind update message from the mobile node;
a trigger signal supply module for generating a trigger signal for triggering the congestion control performed by the TCP module when the MIPv6 module receives the bind update message; and
a trigger-performing module responsive to the trigger signal generated by the trigger signal supply module for retrieving said each TCP connection established with the relevant mobile node so as to restore the congestion control parameter to the value stored before performing the congestion control.
